# DEMANDE DE BREVET EUROPEEN

(11) **EP 1 283 598 A1**
(43) Date de publication de la demande: **12.02.2003**
(21) Numéro de dépôt: 02291887.4
(22) Date de dépôt: 25.07.2002
(51) Int. Cl.: H04B 1/04

(54) **Procédé de transmission par paquets de données avec spectre de commutation symétrique**

(30) Priorité: 09.08.2001 FR 0110646
(71) Demandeur: ALCATEL, 75008 Paris (FR)
(72) Inventeur: Kolodziej, Pierre, 77167 Bagneaux/Loing (FR); Pouliquen, Mikael, 75015 Paris (FR)
(74) Mandataire: Korakis-Ménager, Sophie

(57) **Abrégé**

L'invention concerne un procédé de transmission entre un terminal mobile et une station de base dans un réseau de radiocommunication, ladite transmission étant réalisée par paquets de données, ou bursts, comprenant un en-tête et une queue respectivement associés aux transitions montante et descendante du paquet de données, chaque paquet étant situé dans une fenêtre centrée sur une fréquence d'émission / réception, caractérisé en ce que l'en-tête et la queue du paquet de données sont composés de séquences de bits de valeurs différentes de sorte que le spectre fréquentiel associé aux dites transitions est centré sur ladite fréquence d'émission / réception.

## Description

La présente invention concerne le domaine des radiocommunications entre des terminaux mobiles et des stations de base par émissions et réceptions de paquets de données ou bursts.

L'émission dite burstée est imposée par les contraintes de transmission en accès multiple par division temporelle (TDMA pour Time Division Multiple Access) et fréquentielle (FDMA pour Frequency Division Multiple Access). Le standard GSM (Global System for Mobile communications) exploite en effet une combinaison des techniques connues de TDMA et FDMA pour gérer les transmissions radio de terminaux mobiles sur des fréquences appropriées et pendant des périodes de temps déterminées. Il en est de même du standard DCS (pour Digital Communications System) qui fonctionne selon le même principe que le standard GSM mais sur une autre bande de fréquence, à savoir 1800MHz au lieu de 900 MHz pour le GSM.

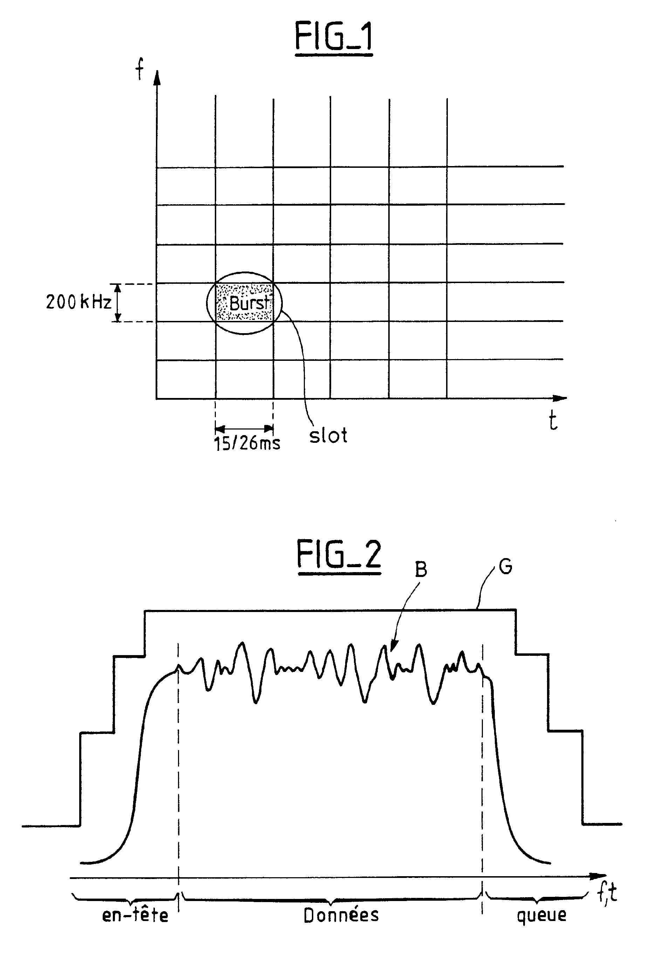

L'élément de base de la transmission radio selon le standard GSM est le burst qui représente une unité de transmission de données et comporte environ une centaine de bits de données modulées. Comme illustré sur la figure 1, un burst a une durée déterminée et occupe une portion déterminée du spectre de fréquence. Au cours d'une communication, un burst est transmis dans une fenêtre de temps et de fréquence donnée, connu sous le terme anglais de « slot ». Plus spécifiquement, selon le standard GSM par exemple, les fréquences centrales de chaque fenêtre sont espacées de 200kHz dans la bande de fréquence et apparaissent toutes les 0.577ms ou 15/56ms dans la bande de temps.

La figure 2 illustre schématiquement un burst, dans la bande de temps t ou de fréquence f. Un burst B comporte un en-tête correspondant à la transition en montée et une queue correspondant à la transition en descente, les données modulées à transmettre étant émises ou reçues dans la portion centrale du burst B. Les données sont modulées simultanément dans la base temporelle et dans la base fréquentielle. Le burst B doit en outre être compris dans un gabarit G imposé par les instances de normalisation. Ce gabarit est symétrique par rapport à la fréquence d'émission / réception et par rapport à la fenêtre temporelle allouée. La norme GSM impose en outre que tous les spectres de fréquence soient symétriques par rapport à la fréquence centrale d'émission / réception et soient inclus dans le gabarit G.

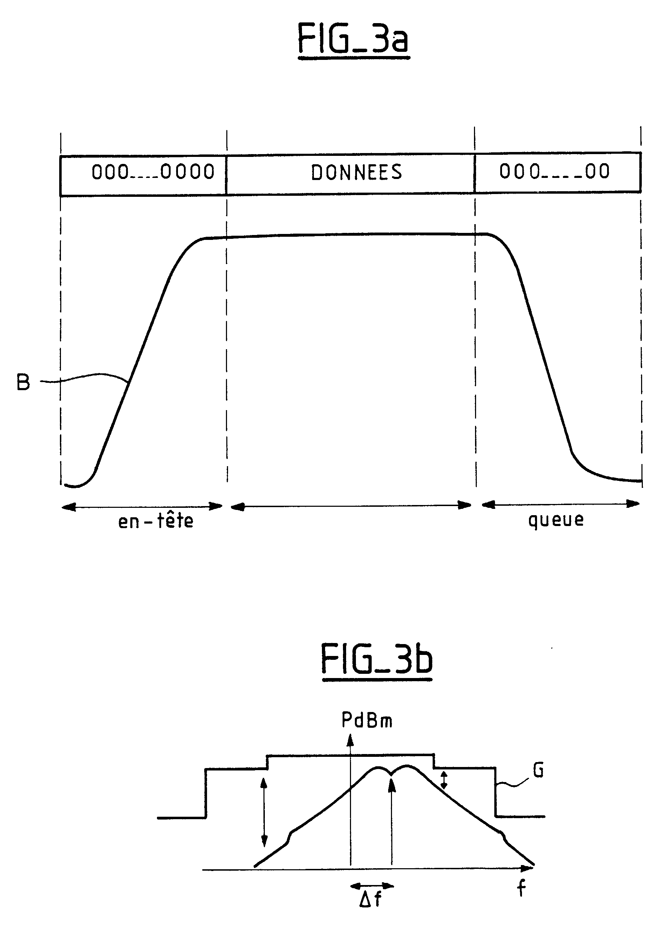

Les terminaux mobiles et les stations de base possèdent des logiciels embarqués d'émission burstée. Ces logiciels sont conçus pour remplir les bursts, tels que précédemment définis, avec les données utiles à transmettre. Or, comme illustré sur la figure 3a, ces logiciels classiques remplissent l'en-tête et la queue du burst par des bits de 0 puisque aucune donnée n'est transmise pendant ces transitions.

Cependant, comme illustré sur la figure 3b (puissance en fonction de la fréquence), un ensemble de bits à zéro va induire un décalage du spectre fréquentiel correspondant aux périodes de transition du burst et entamer la marge exploitable dans le gabarit imposé. En effet, le burst subit une modulation fréquentielle dite GMSK (pour Gaussien Minimum Shift Keying) qui est appliquée à l'ensemble du burst et touche donc également les transitions, c'est à dire l'en-tête et la queue du burst. Or, cette modulation GMSK induit un décalage de π/2 reparti sur une période de 3 bits. Ainsi, chaque bit précédent influence la modulation du bit suivant. Si une succession de bits à zéro se suivent, la phase tourne toujours dans le même sens et induit un décalage de la fréquence. Par exemple, dans le cas d'une émission GSM, le gabarit du burst en fréquence est centré sur 1747khz et le décalage du spectre fréquentiel des transitions du burst peut atteindre Δf=67kHZ ce qui peut entraîner un dépassement du gabarit par le spectre de transition, en cas de contraintes climatiques particulières par exemple. Or un tel dépassement hors du gabarit prévu par le standard GSM peut entraîner des interférences avec des transmissions d'un burst dans une autre fenêtre.

Un recentrage du spectre par des moyens logiciels peut être envisagé, mais c'est souvent insuffisant.

La présente invention a pour objectif de résoudre cet inconvénient du décalage fréquentiel dans le spectre de transition du burst. L'invention a ainsi pour but de proposer un procédé de transmission burstée dans lequel le spectre fréquentiel des périodes de transition est symétrique par rapport à la fréquence centrale d'émission / réception et donc symétrique par rapport au gabarit du burst.

L'invention concerne plus particulièrement un procédé de transmission entre un terminal mobile et une station de base dans un réseau de radiocommunication, ladite transmission étant réalisée par paquets de données, ou bursts, comprenant un en-tête et une queue respectivement associés aux transitions montante et descendante du paquet de données, chaque paquet étant situé dans une fenêtre centrée sur une fréquence d'émission / réception, caractérisé en ce que l'en-tête et la queue du paquet de données sont composés de séquences de bits de valeurs différentes de sorte que le spectre fréquentiel associé aux dites transitions est centré sur ladite fréquence d'émission / réception.

Selon un premier mode de réalisation, les séquences de bits composant l'en-tête et la queue du burst sont périodiques.

Selon une caractéristique, les séquences périodiques de bits sont composées de '01' successifs.

Selon un deuxième mode de réalisation, les séquences de bits composant l'en-tête et la queue du burst sont pseudo-aléatoires.

Selon un troisième mode de réalisation, les séquences de bits composant l'en-tête et la queue du burst sont évolutives entre deux bursts successifs.

Selon les modes de mise en oeuvre, l'évolution des séquences de bits composant l'en-tête et la queue du burst est une translation ou une permutation circulaire.

L'invention concerne également un terminal mobile de radiocommunication apte à établir une transmission par paquets de données, ou bursts, chaque paquet étant situé dans une fenêtre centrée sur une fréquence d'émission / réception, le terminal comportant un logiciel embarqué conçu pour remplir lesdits bursts avec des données, caractérisé en ce que ledit logiciel rempli l'en-tête et la queue du paquet de données avec des séquences de bits de valeurs différentes de manière à ce que le spectre de commutation des paquets de données soit centré sur ladite fréquence d'émission / réception.

L'invention concerne également une station de base associée à un réseau de radiocommunication apte à établir une transmission par paquets de données, ou bursts, chaque paquet étant situé dans une fenêtre centrée sur une fréquence d'émission / réception,, la station de base comportant un logiciel conçu pour remplir lesdits bursts avec des données, caractérisé en ce que ledit logiciel rempli l'en-tête et la queue du paquet de données avec des séquences de bits de valeurs différentes de manière à ce que le spectre de commutation des paquets de données est centré sur ladite fréquence d'émission / réception.

La présente invention sera mieux comprise à la lecture de la description qui suit, donnée à titre d'exemple illustratif et non limitatif et faite en référence aux figures annexées dans lesquelles :
- la figure 1, déjà décrite, illustre l'émission burstée dans une fenêtre temporelle et fréquentielle selon la norme GSM ;
- la figure 2, déjà décrite, illustre schématiquement un burst ;
- la figure 3a, déjà décrite, illustre un burst selon l'art antérieur ;
- la figure 3b, déjà décrite, illustre le spectre fréquentiel des transitions du burst de la figure 3a ;
- la figure 4a illustre un burst selon un premier mode de réalisation de l'invention ;
- la figure 4b illustre le spectre fréquentiel des transitions du burst de la figure 4a ;
- la figure 5 illustre des spectres fréquentiels des transitions de bursts selon un deuxième mode de réalisation de l'invention ;
- la figure 6 illustre des spectres fréquentiels des transitions de bursts selon un troisième mode de réalisation de l'invention.

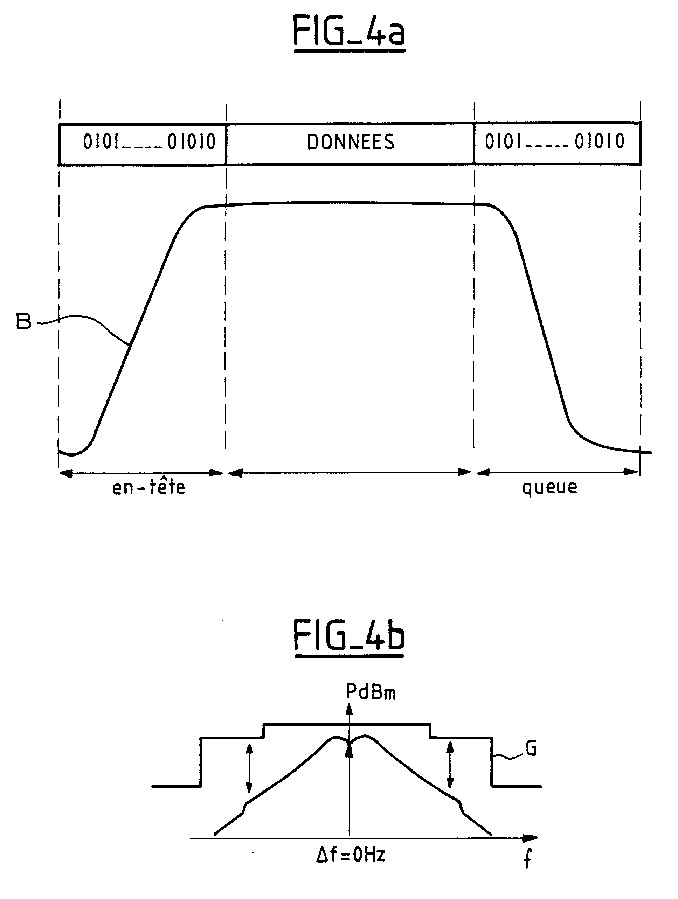

Selon l'invention, en référence aux figures 4 à 6, l'en-tête et la queue du burst B sont composés de séquences successives de bits de valeurs différentes choisies de manière à permettre une modulation GMSK sans décalage fréquentiel.

Ces séquences de bits de valeurs différentes selon l'orientation sont créées par les logiciels disposés dans les terminaux mobiles et dans les stations de base pour remplir les bursts avec des données. Ces logiciels sont classiques, mais comportent des séquences spécifiques pour la mise en oeuvre de l'invention.

Selon un premier mode de réalisation de l'invention, illustré sur la figure 4a, l'en-tête et la queue du burst B sont composées d'une succession de séquences périodiques de bits de valeurs différentes, telle qu'une succession de '01' par exemple. De telles valeurs permettent une modulation GMSK sans décalage fréquentiel et donc de rester centré sur la fréquence d'émission. En effet, une succession de séquences périodiques de bits de valeurs différentes permet de compenser à chaque bit modulé le sens du déphasage et donc le décalage fréquentiel.

La figure 4b illustre le spectre fréquentiel de transition obtenu avec un en-tête et une queue de burst composés de séquences successives de bits périodiques selon l'invention. Le spectre fréquentiel des transitions du burst est ainsi largement compris dans le gabarit G avec des marges conséquentes de part et d'autre du spectre afin d'engranger d'éventuelles fluctuations sans risquer de perturber l'émission ou la réception d'un autre burst.

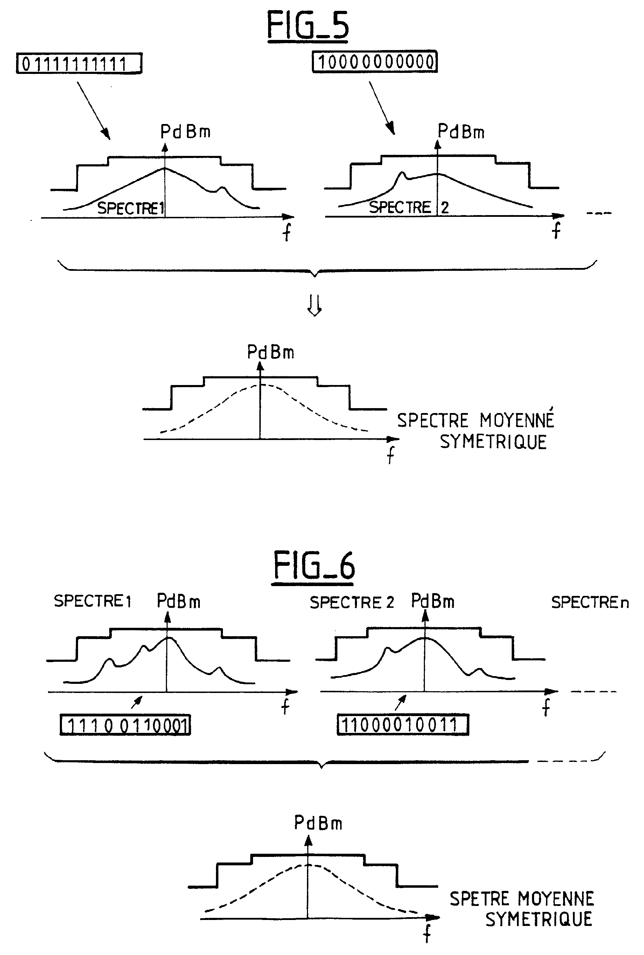

Selon un deuxième mode de réalisation de l'invention, illustré sur la figure 5, l'en-tête et la queue du burst B sont composées d'une succession de séquences de bits de valeurs différentes pseudo-aléatoires, telle qu'une succession de bits à '0' avec un bit à '1' par exemple, ou le contraire. De telles valeurs permettent de corriger le décalage fréquentiel observé sur une pluralité de bursts par une moyenne des modulations GMSK de chaque burst. En effet, une telle succession de valeurs de bits de modulation provoquera, lors de la modulation, une remontée du spectre de fréquence correspondant au bit à '1'. L'emplacement de ce bit à '1' varie d'un burst à l'autre et permet d'obtenir un spectre fréquentiel lissé sur la moyenne des modulations fréquentielles d'une pluralité de bursts.

Selon un troisième mode de réalisation de l'invention, illustré sur la figure 6, l'en-tête et la queue du burst B sont composées d'une succession de séquences de bits de valeurs différentes présentant une évolution d'un burst à l'autre, telle qu'une évolution par translation ou par permutation circulaire des valeurs des bits composant lesdites séquences. De telles séquences évolutives permettent également de corriger le décalage fréquentiel observé sur une pluralité de bursts par une moyenne des modulations GMSK de chaque burst.

## Revendications

1. Procédé de transmission entre un terminal mobile et une station de base dans un réseau de radiocommunication, ladite transmission étant réalisée par paquets de données, ou bursts, comprenant un en-tête et une queue respectivement associés aux transitions montante et descendante du paquet de données, chaque paquet étant situé dans une fenêtre centrée sur une fréquence d'émission / réception, **caractérisé en ce que** l'en-tête et la queue du paquet de données sont composés de séquences de bits de valeurs différentes de sorte que le spectre fréquentiel associé aux dites transitions est centré sur ladite fréquence d'émission / réception.

2. Procédé de transmission selon la revendication 1, **caractérisé en ce que** les séquences de bits composant l'en-tête et la queue du burst sont périodiques.

3. Procédé de transmission selon la revendication 2, **caractérisé en ce que** les séquences de bits sont composées de '01' successifs.

4. Procédé de transmission selon la revendication 1, **caractérisé en ce que** les séquences de bits composant l'en-tête et la queue du burst sont pseudo-aléatoires.

5. Procédé de transmission selon la revendication 1, **caractérisé en ce que** les séquences de bits composant l'en-tête et la queue du burst sont évolutives entre deux bursts successifs.

6. Procédé de transmission selon la revendication 5, **caractérisé en ce que** l'évolution des séquences de bits composant l'en-tête et la queue de deux bursts successifs est une translation des valeurs des bits.

7. Procédé de transmission selon la revendication 5, **caractérisé en ce que** l'évolution des séquences de bits composant l'en-tête et la queue de deux bursts successifs est une permutation circulaire des valeurs des bits.

8. Terminal mobile de radiocommunication apte à établir une transmission par paquets de données, ou bursts, chaque paquet étant situé dans une fenêtre centrée sur une fréquence d'émission / réception, le terminal comportant un logiciel embarqué conçu pour remplir lesdits bursts avec des données, **caractérisé en ce que** ledit logiciel rempli l'en-tête et la queue du paquet de données avec des séquences de bits de valeurs différentes de manière à ce que le spectre de commutation des paquets de données soit centré sur ladite fréquence d'émission / réception.

9. Station de base associée à un réseau de radiocommunication apte à établir une transmission par paquets de données, ou bursts, chaque paquet étant situé dans une fenêtre centrée sur une fréquence d'émission / réception,, la station de base comportant un logiciel conçu pour remplir lesdits bursts avec des données, **caractérisé en ce que** ledit logiciel rempli l'en-tête et la queue du paquet de données avec des séquences de bits de valeurs différentes de manière à ce que le spectre de commutation des paquets de données est centré sur ladite fréquence d'émission / réception.
